# EUROPEAN PATENT SPECIFICATION

(11) **EP 4 570 426 B1**
(45) Date of publication and mention of the grant of the patent: **03.06.2026**
(21) Application number: 24217662.6
(22) Date of filing: 05.12.2024
(51) Int. Cl.: B23Q 7/04, A61C 1/00, B23Q 17/24, B23Q 11/08

(54) **CUTTING MACHINE**
SCHNEIDEMASCHINE
MACHINE DE COUPE

(30) Priority: 14.12.2023 JP 2023211034
(43) Date of publication of application: 18.06.2025
(73) Proprietor: DGSHAPE Corporation, Hamamatsu-shi, Shizuoka 431-2103 (JP)
(72) Inventor: Shimamiya, Hiroki, Hamamatsu-shi, Shizuoka 431-2103 (JP); Sato, Ryo, Hamamatsu-shi, Shizuoka 431-2103 (JP)
(74) Representative: Grünecker Patent- und Rechtsanwälte PartG mbB

(56) References cited:
- EP-A1- 3 506 036
- EP-B1- 3 612 348
- JP-A- 2017 013 155
- JP-A- H11 156 677

## Description

### TECHNICAL FIELD

### Field of the Invention

The present invention relates to a cutting machine.

### BACKGROUND ART

### Description of the Related Art

For example, Japanese Laid-open Publication No. 2017-13155 discloses a cutting machine that cuts a workpiece that is to be cut by rotating a bar-like cutting tool around an axis of the cutting tool. The cutting machine includes a spindle including a gripping portion that grips the cutting tool that cuts the workpiece and a holding portion that holds the workpiece.

The cutting machine includes a case body having an internal space in which the holding portion and the spindle are stored. An opening is formed in a front portion of the case body. The case body is provided with a front cover that can open and close the opening. Herein, the workpiece held by the holding portion is manually replaced by a user through the opening of the case body.

Incidentally, when the user manually replaces the workpiece held by the holding portion, depending on a height of the user, it is difficult to check a state where the workpiece is held by the holding portion in some cases. When the user replaces the workpiece held by the holding portion, it is preferable for the user that replacement of the workpiece as easy as possible.

EP 3 506 036 A1 discloses a cutting machine according to the preamble of claim 1.

### SUMMARY OF THE INVENTION

In view of the foregoing, the present invention has been devised, and it is therefore an object of the present invention to provide a cutting machine that makes it easy for the user to manually replace a workpiece that is to be cut held by a holding device.

The present invention is defined in independent claim 1. Preferred embodiments are laid down in the dependent claims. A cutting machine according to the present invention includes a holding device that holds a workpiece that is to be cut, a case body in which an area in which the holding device is stored and an opening portion that is opened to one side in a first direction and communicates with the area are formed, a rotation device that rotates the holding device around an axis line that extends in a second direction that is orthogonal to the first direction when viewed from top, and a control device. The holding device is configured to hold the workpiece by moving the workpiece in a holding direction toward the holding device by a user. The control device includes a rotation controller that rotates, when the user replaces the workpiece held by the holding device, the holding device around the axis line such that the holding device is placed to be in a rotation orientation achieved by rotating the holding direction from the first direction only by a predetermined rotation angle.

According to the cutting machine, when the user manually replaces the workpiece held by the holding device, adjustment can be made by rotating the holding device by the rotation controller to achieve the rotation orientation of the holding device that allows the user to easily replace the workpiece. Accordingly, the user can manually replace the workpiece easily.

According to the present invention, a cutting machine that makes it easy for the user to manually replace a workpiece that is to be cut held by a holding device can be provided.

### BRIEF DESCRIPTION OF THE DRAWINGS

FIG. 1 is a perspective view illustrating a cutting machine according to a preferred embodiment.
FIG. 2 is a longitudinal cross-sectional view of the cutting machine when viewed from left.
FIG. 3 is a longitudinal cross-sectional view of the cutting machine when viewed from right.
FIG. 4 is a perspective view illustrating the cutting machine when a slide cover is opened.
FIG. 5 is a plan view of a work holder.
FIG. 6 is a block diagram of the cutting machine according to the preferred embodiment.
FIG. 7 is a schematic view illustrating a state where the work holder is placed in a cutting position and a state where the work holder is placed in a replacement position.
FIG. 8 is a schematic view illustrating a rotation orientation of the work holder when a rotation angle of the work holder is a first rotation angle.
FIG. 9 is a schematic view illustrating the rotation orientation of the work holder when the rotation angle of the work holder is a second rotation angle.
FIG. 10 a schematic view illustrating the rotation orientation of the work holder when the rotation angle of the work holder is a third rotation angle.
FIG. 11 is a flowchart illustrating steps in determining the rotation orientation of the work holder, based on a rotation angle designated by a user.
FIG. 12 is a flowchart illustrating steps in determining the rotation orientation of the work holder, based on a rotation angle in accordance with a height of an eye level of the user.

### DETAILED DESCRIPTION OF THE PREFERRED EMBODIMENTS

With reference to the attached drawings, a preferred embodiment of a cutting machine according to the present invention will be described below. Note that, as a matter of course, the preferred embodiment described herein is not intended to be particularly limiting the present invention. Also, members and portions that have the same function are denoted by the same reference symbol and redundant description will be omitted or simplified, as appropriate.

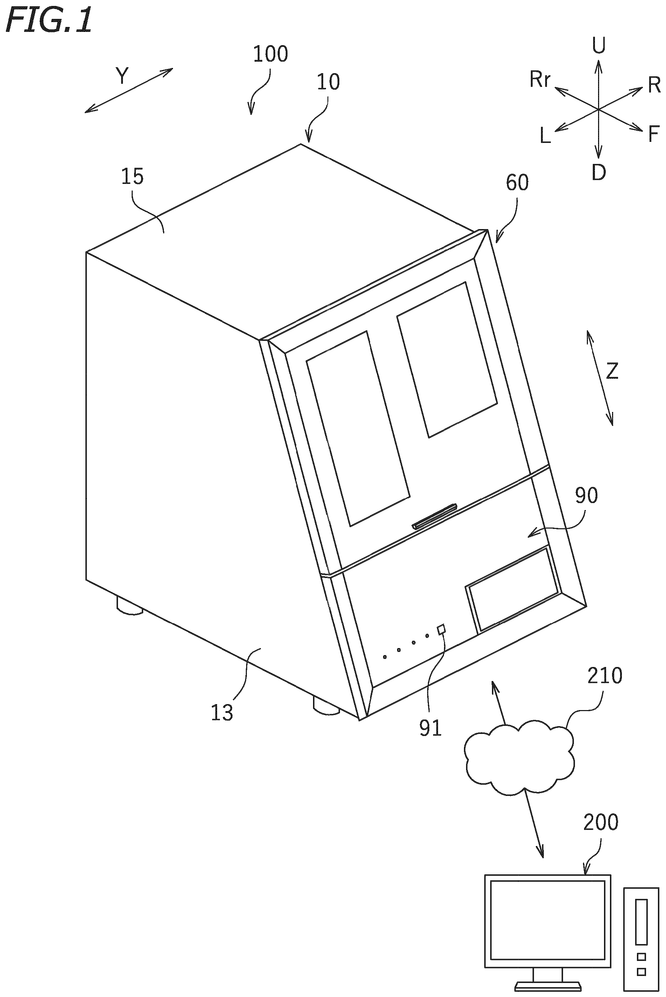

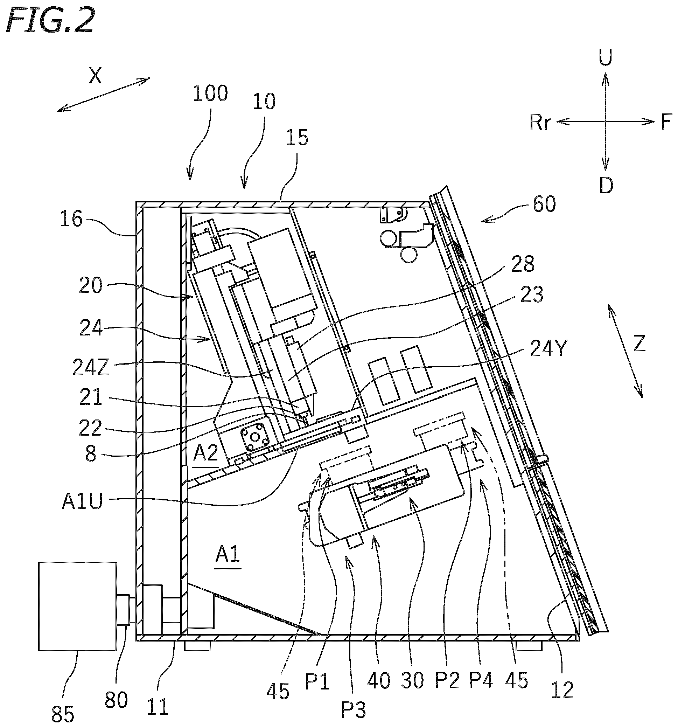

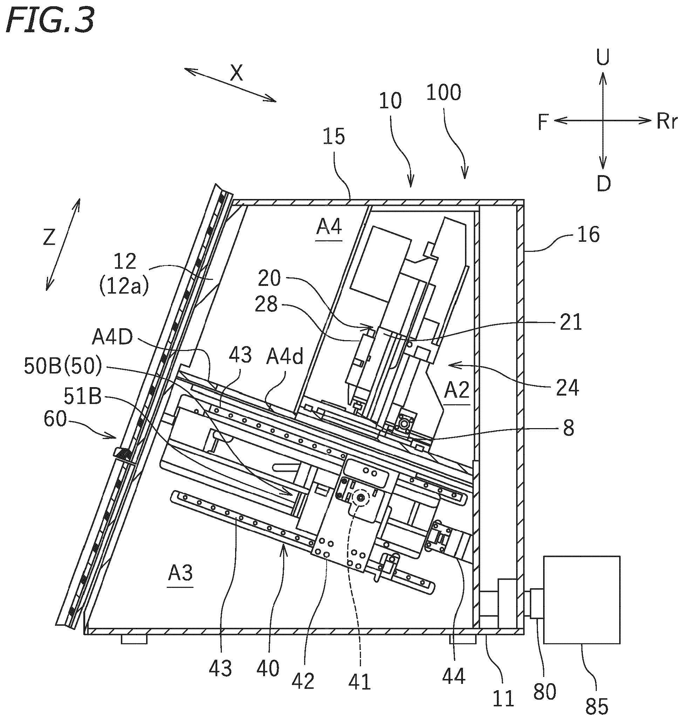

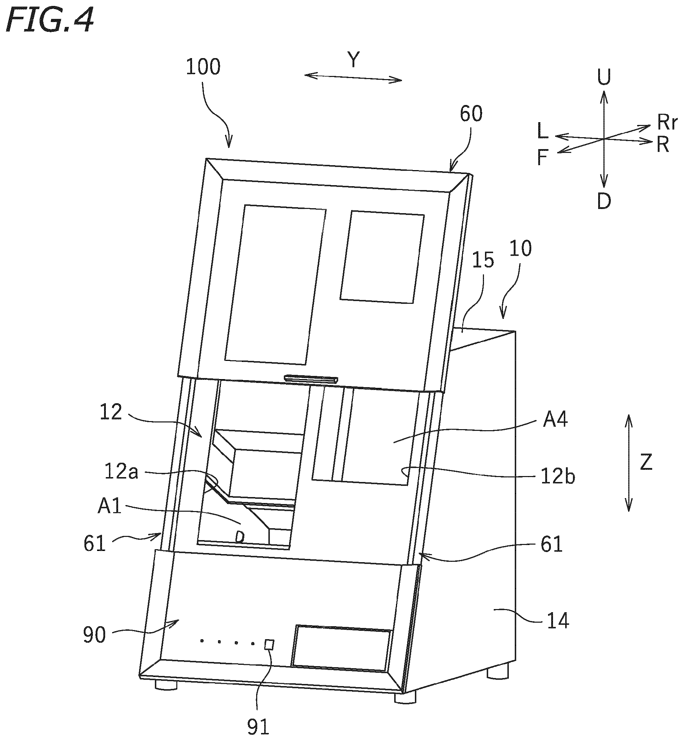

FIG. 1 is a perspective view illustrating a cutting machine 100 according to this preferred embodiment. FIG. 2 is a longitudinal cross-sectional view of the cutting machine 100 when viewed from left. FIG. 3 is a longitudinal cross-sectional view of the cutting machine 100 when viewed from right. FIG. 4 is a perspective view illustrating the cutting machine 100 when a slide cover 60 is opened. The reference signs F, Rr, L, R, U and D as used in the drawings refer to front, rear, left, right, up, and down of the cutting machine 100, respectively. Note that the directions described above are defined merely for convenience of explanation, do not limit an installation form of the cutting machine 100, and do not limit the present invention.

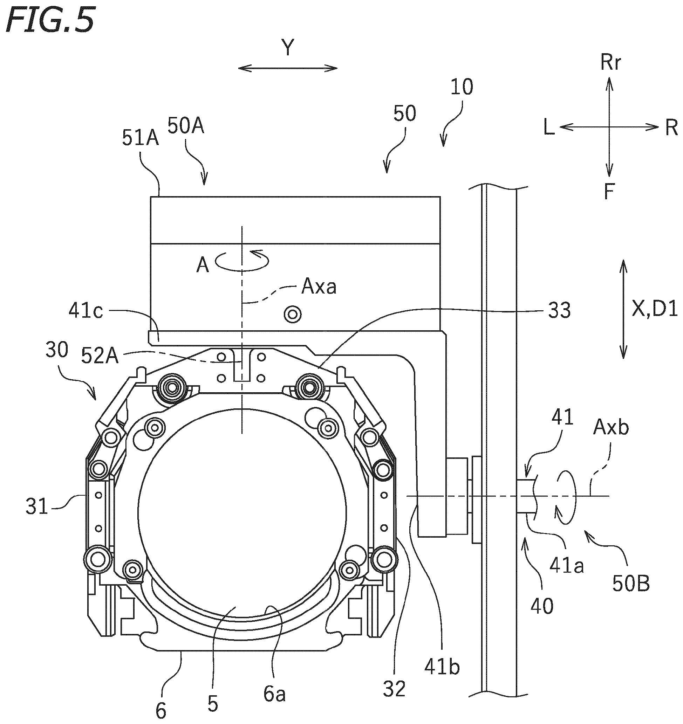

In this preferred embodiment, the cutting machine 100 produces a target object by cutting a workpiece 5 that is to be cut (see FIG. 5). Herein, although there is no particular limitation on a type of the target object, the target object is a dental molded article, for example, a crown prosthesis, an artificial tooth, a denture base, or the like. Examples of the crown prosthesis include, for example, a crown, a bridge, a coping, an inlay, an onlay, a veneer, a custom abutment, or the like. In this preferred embodiment, the cutting machine 100 is used in the dental field and produces a dental molded article from the workpiece 5. However, the field in which the cutting machine 100 is used is not limited to the dental field.

As illustrated in FIG. 1, the cutting machine 100 includes a case body 10. The case 10 is formed into a box shape, and has a space inside. The space inside the case body 10 is partitioned into multiple areas.

Herein, as illustrated in FIG. 2, as the multiple areas, a cutting area A1 in which a work holder 30 that holds the workpiece 5 (see FIG. 5) is stored and a storage area A2 in which a cutting device 20 is stored are provided inside the case body 10. The cutting area A1 is an area in which the workpiece 5 is cut. The cutting area A1 is an example of an area according to the present invention. A first opening 12a (see FIG. 4) is formed in a front of the cutting area A1. The cutting area A1 communicates with outside of the cutting machine 100 through the first opening 12a. The storage area A2 is positioned above the cutting area A1.

As illustrated in FIG. 3, a driving device area A3 in which a holder moving device 40 that moves the work holder 30 and a tool stocker 45 (see FIG. 2) are stored and a tool replacement area A4 arranged in front of the storage area A2 are provided in the case body 10. The driving device area A3 is positioned at right of the cutting area A1. A second opening 12b (see FIG. 4) is formed in front of the tool replacement area A4. The tool replacement area A4 communicates with the outside of the cutting machine 100 through the second opening 12b.

As illustrated in FIG. 4, a slide cover 60 is provided at a front surface of the case body 10 to freely open and close the case body 10. The case body 10 is provided with a slide rail 61 with which the slide cover 60 is engaged and that extends from a front and lower side toward a rear and upper side.

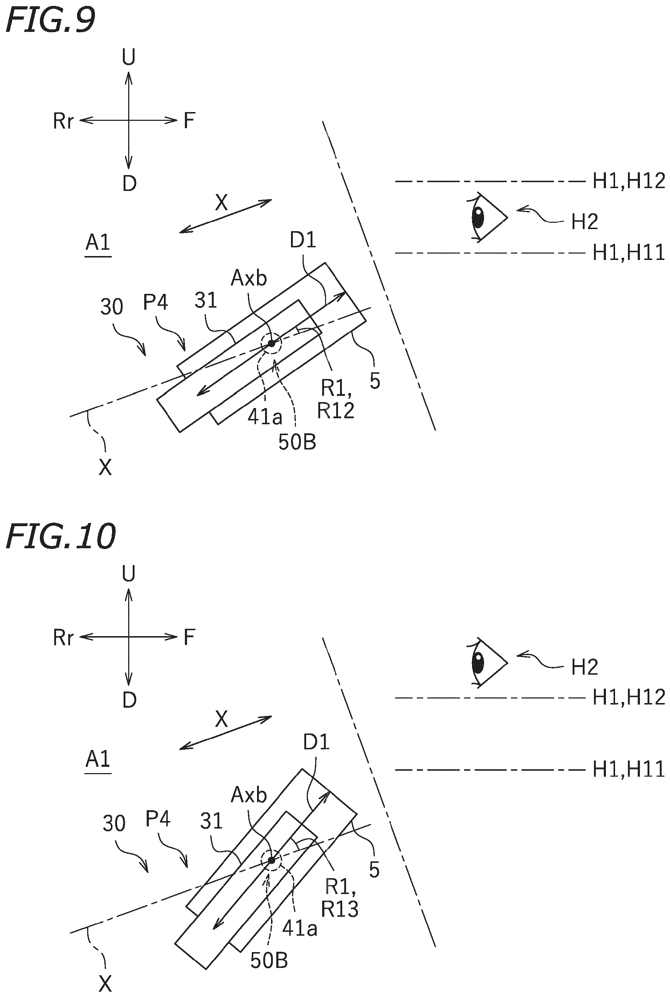

In this preferred embodiment, an operation panel 90 is provided below the slide cover 60. The user performs an operation related to cutting via the operation panel 90. The operation panel 90 is operated by the user when the user designates a rotation angle R1 (see FIG. 9) that will be described later. For example, the operation panel 90 includes one or more input buttons 91. The user can designate the rotation angle R1 by performing an operation, such as pressing any one of the input buttons 91, or the like.

As illustrated in FIG. 2, the case body 10 includes a bottom wall 11, a front wall 12, a left side wall 13 (see FIG. 1), a right side wall 14 (see FIG. 4), a top wall 15, and a back wall 16. Each of these components that constitute the case body 10 is formed of a steel plate or the like. The bottom wall 11 extends in a front-rear direction and a left-right direction and constitutes a bottom surface of the cutting machine 100. The left side wall 13 is connected to a left end of the bottom wall 11. The left side wall 13 extends upward from the left end of the bottom wall 11. The right side wall 14 is connected to a right end of the bottom wall 11. The right side wall 14 extends upward from the right end of the bottom wall 11. The back wall 16 is connected to a rear end of the bottom wall 11. The back wall 16 extends upward from the rear end of the bottom wall 11. A left end of the back wall 16 is connected to a rear end of the left side wall 13. A right end of the back wall 16 is connected to a rear end of the right side wall 14. The top wall 15 is provided above the bottom wall 11 to extend in parallel to the bottom wall 11. The top wall 15 is connected to an upper end of the left side wall 13, an upper end of the right side wall 14, and an upper end of the back wall 16. The front wall 12 is connected to a front end of the bottom wall 11. In this preferred embodiment, the front wall 12 extends upward from the front end of the bottom wall 11 as well as being inclined rearward.

In the following description, a direction in which the front wall 12 extends will be also referred to as a Z-axis direction. Also, in the following description, unless otherwise stated, an upper side in the Z-axis direction will be also referred simply as an upper side, and a lower side in the Z-axis direction will be also referred to simply as a lower side. A left end of the front wall 12 is connected to a front end of the left side wall 13, and a right end of the front wall 12 is connected to a front end of the right side wall 14. An upper end of the front wall 12 is connected to a front end of the top wall 15. As illustrated in FIG. 4, the first opening 12a that communicates with the cutting area A1 and the second opening 12b that communicates with the tool replacement area A4 are formed in the front wall 12. In this preferred embodiment, the first opening 12a is formed in the case body 10 to be opened to a front side in an X-axis direction that will be described later. The first opening 12a is an example of an opening portion formed in a case body.

FIG. 5 is a plan view of the work holder 30. As illustrated in FIG. 5, the cutting machine 100 includes the work holder 30, the holder moving device 40, a holder rotation device 50, the cutting device 20 (see FIG. 2), and the tool stocker 45 (see FIG. 2). The work holder 30 holds the workpiece 5. Herein, the work holder 30 holds the workpiece 5 via an adapter 6. In this preferred embodiment, a fitting hole 6a is formed to pass through in an up-down direction in a central portion of the adapter 6. The workpiece 5 is fitted to the fitting hole 6a and is thus attached to the adapter 6. However, the work holder 30 may be configured to directly hold the workpiece 5, not via any other component, such as the adapter 6 or the like. The work holder 30 is an example of a holding device that holds the workpiece 5. There is no particular limitation on a configuration of the work holder 30. As illustrated in FIG. 5, the work holder 30 includes a first arm 31, a second arm 32, and a coupling portion 33. In an orientation of the work holder 30 illustrated in FIG. 5, the first arm 31 and the second arm 32 are a pair of left and right arms, and are arranged in the left-right direction. Herein, the first arm 31 is arranged at left of the second arm 32. Each of the first arm 31 and the second arm 32 extends in the front-rear direction (specifically, the X-axis direction). The coupling portion 33 couples the first arm 31 and the second arm 32. Herein, the coupling portion 33 extends in the left-right direction, and is connected to a rear end of the first arm 31 and a rear end of the second arm 32. The workpiece 5 attached to the adapter 6 is inserted between the first arm 31 and the second arm 32, and thus, is held by the work holder 30. Herein, when the workpiece 5 is held by the work holder 30, in other words, when the workpiece 5 is attached to the work holder 30, the workpiece 5 (specifically, the adapter 6 to which the workpiece 5 is attached) abuts on the coupling portion 33.

The workpiece 5 has, for example, a disk-like shape. The workpiece 5 is made of a type of a material, such as zirconia, a polymethyl methacrylate resin (PMMA), a hybrid resin, a polyether ether ketone resin (PEEK), plaster, or the like. When zirconia is used as a type of a material of the workpiece 5, for example, semi-sintered zirconia is used. However, there is no particular limitation on the shape and the material of the workpiece 5.

The holder moving device 40 supports and moves the work holder 30. In this preferred embodiment, the holder moving device 40 moves the work holder 30 in the front-rear direction. More specifically, as illustrated in FIG. 2, the holder moving device 40 moves the work holder 30 diagonally in the front-rear direction. When the work holder 30 is moved forward by the holder moving device 40, the work holder 30 also moves upward. When the work holder 30 is moved rearward by the holder moving device 40, the work holder 30 also moves downward. A direction in which the work holder 30 is moved by the holder moving device 40 will be hereinafter also referred to as the X-axis direction. The holder moving device 40 moves the work holder 30 in the X-axis direction. The holder moving device 40 is an example of a moving device. Hereinafter, unless otherwise stated, front in the X-axis direction will be referred to simply as "front" and rear in the X-axis direction will be referred to simply as "rear." In this preferred embodiment, the X-axis direction is an example of a first direction. The front side in the X-axis direction is an example of one side in the first direction. As illustrated in FIG. 5, the holder moving device 40 is connected to the holder rotation device 50.

The holder moving device 40 includes a support arm 41 that extends in the left-right direction and supports the work holder 30. As illustrated in FIG. 3, the holder moving device 40 includes an X-axis direction moving body 42 connected to the support arm 41, a pair of X-axis guide rails 43, and an X-axis direction driving motor 44. The holder moving device 40 moves the work holder 30 in the X-axis direction by moving the support arm 41 in the X-axis direction. Herein, the X-axis direction moving body 42, the pair of X-axis guide rails 43, the X-axis direction driving motor 44, and a part of the support arm 41 of the holder moving device 40 are stored in the driving device area A3.

The pair of X-axis guide rails 43 extend in the X-axis direction. The X-axis direction moving body 42 is slidably engaged with the pair of X-axis guide rails 43. The X-axis direction moving body 42 is configured to move in the X-axis direction along the X-axis guide rails 43. Although not illustrated, for example, the X-axis direction moving body 42 is connected to a ball screw. That is, the holder moving device 40 includes a ball screw mechanism. The X-axis direction driving motor **44** rotates the ball screw. When the X-axis direction driving motor **44** is driven, the X-axis direction moving body 42 moves in the X-axis direction along the X-axis guide rails 43. Note that the holder moving device 40 is not limited to a holder moving device including a ball screw mechanism and, for example, may include a timing belt or a wire.

As illustrated in FIG. 5, the support arm 41 includes a rotating shaft 41a that rotates around an axis line Axb extending in the left-right direction, a first rotating arm 41b that is connected to the rotating shaft 41a orthogonally to the axis line Axb and rotates together with the rotating shaft 41a in the front-rear direction, and a second rotating arm 41c connected to the first rotating arm 41b in parallel to the axis line Axb (in other words, orthogonally to the first rotating arm 41b). As illustrated in FIG. 3, a B-axis rotating motor 51B of a B-axis rotation device 50B that will be described later is connected to the X-axis direction moving body 42. The rotating shaft 41a (see FIG. 5) is rotated around the axis line Axb (see FIG. 5) by the B-axis rotating motor 51B.

The holder rotation device 50 rotates the work holder 30. As illustrated in FIG. 5, the holder rotation device 50 also includes an A-axis rotation device 50A that rotates the work holder 30 in the left-right direction and the B-axis rotation device 50B (see FIG. 3) that rotates the work holder 30 in the front-rear direction. The A-axis rotation device 50A includes an A-axis rotating motor 51A and a rotation axis 52A. The A-axis rotating motor 51A is fixed to the second rotation arm 41c. The rotation axis 52A is connected to the A-axis rotating motor 51A (specifically, a drive unit including the A-axis rotating motor 51A) and extends in the X-axis direction along an axis line Axa. Herein, a rear end of the rotation axis 52A is connected to the A-axis rotating motor 51A. A front end of the rotation axis 52A is connected to the work holder 30 (specifically, a central portion of the coupling portion 33 of the work holder 30). In this preferred embodiment, when the A-axis rotating motor 51A is driven, the rotation axis 52A rotates around the axis line Axa. The work holder 30 rotates around the axis line Axa as the rotation axis 52A rotates, and therefore, can rotate in the left-right direction.

The B-axis rotation device 50B includes the B-axis rotating motor 51B (see FIG. 3) and the rotating shaft 41a (see FIG. 5) described above. As illustrated in FIG. 3, the B-axis rotating motor 51B is connected to the X-axis direction moving body 42 in a manner described above. As illustrated in FIG. 5, the rotating shaft 41a extends in the left-right direction. A right end of the rotating shaft 41a is connected to the B-axis rotating motor 51B. A left end of the rotating shaft 41a is connected to the work holder 30 via the first rotating arm 41b, the second rotating arm 41c, and the rotation axis 52A. Herein, the B-axis rotating motor 51B is driven, and thus, the rotating shaft 41a rotates around the axis line Axb. As the rotating shaft 41a rotates, the work holder 30 rotates together with the first rotating arm 41b and the second rotating arm 41c or the like around the axis line Axb, and therefore, can rotate in the front-rear direction. Note that, in this preferred embodiment, the B-axis rotation device 50B is an example of a rotation device.

The cutting device 20 illustrated in FIG. 2 cuts the workpiece 5. The cutting device 20 cuts the workpiece 5 by causing a processing tool 8 to contact the workpiece 5 while rotating the processing tool 8. The cutting device 20 includes a spindle 21, a tool gripping portion 22 that grips the processing tool 8, a spindle rotation device 23 that rotates the spindle 21, and a cutting and moving device 24 that can move the spindle 21 in the left-right direction (herein, a Y-axis direction) and the Z-axis direction. When the cutting device 20 is not performing cutting on the workpiece 5, the cutting device 20 is arranged in the storage area A2.

The spindle 21 rotates the tool gripping portion 22 and the processing tool 8 gripped by the tool gripping portion 22 around a longitudinal direction. The spindle 21 extends, for example, in the Z-axis direction. The spindle rotation device 23 is connected to the spindle 21. When the spindle rotation device 23 is driven, the spindle 21 rotates around a central axis that extends in the Z-axis direction. Note that there is no particular limitation on a configuration of the spindle rotation device 23 and, for example, an electric motor or the like may be used.

The tool gripping portion 22 grips the processing tool 8, and is provided to the spindle 21. In the cutting machine 100, multiple processing tools 8 having different diameters and cutting portions with different shapes are prepared in advance. The multiple processing tools 8 are stored in the tool stocker 45. The tool gripping portion 22 selectively grips one of the multiple processing tools 8. The spindle 21 rotates around the central axis that extends in the Z-axis direction, and thus, the tool gripping portion 22 and the processing tool 8 gripped by the tool gripping portion 22 rotate around the central axis of the processing tool 8.

As illustrated in FIG. 2, an air blow device 28 is provided in the cutting device 20. The air blow device 28 is provided at a side of the spindle 21. The air blow device 28 jets air downward from a lower end portion thereof in the Z-axis direction. There is no particular limitation on a supply source of the air jetted by the air blow device 28. For example, the supply source may be a compressor or the like installed outside the cutting machine 100. During cutting of the workpiece 5, the air blow device 28 jets air, so that cutting powder generated when the workpiece 5 is cut can be blown off. Although cutting heat is generated during cutting, the air blow device 28 jets air toward the workpiece 5 and the processing tool 8, and therefore, the workpiece 5 and the processing tool 8 can be cooled down.

The cutting and moving device 24 moves the spindle 21, the tool gripping portion 22, the spindle rotation device 23, and the air blow device 28 in the Z-axis direction and the left-right direction. Herein, the left-right direction is a direction that is orthogonal to the X-axis direction and the Z-axis direction. The left-right direction will be hereinafter also referred to as the Y-axis direction. The cutting and moving device 24 is provided above the work holder 30. The cutting and moving device 24 moves the spindle 21, the tool gripping portion 22, the spindle rotation device 23, and the air blow device 28 in the Y-axis direction and the Z-axis direction, and the holder moving device 40 moves the work holder 30 in the X-axis direction, so that a positional relationship between the processing tool 8 and the workpiece 5 three-dimensionally changes. When the spindle 21, the tool gripping portion 22, the spindle rotation device 23, and the air blow device 28 move in the Z-axis direction, accordingly, the spindle 21, the tool gripping portion 22, the spindle rotation device 23, and the air blow device 28 appear in the cutting area A1 or retreat in the storage area A2. Herein, the cutting area A1 and the storage area A2 communicate with each other via an opening portion A1U. The opening portion A1U has a size that is large enough for the spindle 21, the tool gripping portion 22, the spindle rotation device 23, and the air blow device 28 to pass therethrough. When cutting is performed on the workpiece 5, the cutting and moving device 24 moves the spindle 21, the tool gripping portion 22, the spindle rotation device 23, and the air blow device 28 to the cutting area A1.

As illustrated in FIG. 2, the cutting and moving device 24 includes a left and right moving device 24Y and an up and down moving device 24Z. When the left and right moving device 24Y is driven, the spindle 21, the tool gripping portion 22, the spindle rotation device 23, and the air blow device 28 move in the Y-axis direction. When the up and down moving device 24Z is driven, the spindle 21, the tool gripping portion 22, the spindle rotation device 23, and the air blow device 28 move in the Z-axis direction. Note that there is no particular limitation on a configuration of the cutting and moving device 24. For example, the left and right moving device 24Y may be constituted of a guide rail that extends in the Y-axis direction, a left and right moving body slidably engaged with the guide rail, a ball screw connected to the left and right moving body, an electric motor that rotates the ball screw, or the like. For example, similar to the left and right moving device 24Y, the up and down moving device 24Z may be a mechanism including a ball screw.

As illustrated in FIG. 2, an exhaust duct 80 is provided in a rear and lower portion of the case body 10. The exhaust duct 80 extends from the cutting area A1 inside the case body 10 to outside of the case body 10. A dust collector 85 is installed outside the case body 10. The dust collector 85 is connected to an end portion of the exhaust duct 80 located outside the case body 10. Although there is no particular limitation on a configuration of the dust collector 85, for example, the dust collector 85 includes a fan. When the fan rotates, accordingly, the dust collector 85 can suck cutting powder with air in the cutting area A1 via the exhaust duct 80.

The tool stocker 45 is stored in the driving device area A3 (see FIG. 3). As illustrated in FIG. 2, the tool stocker 45 is a box-shaped member that can store the multiple processing tools 8 each being formed in a bar-like shape. The multiple processing tools 8 are used properly, for example, in accordance with a material of the workpiece 5 and a type of cutting. The tool stocker 45 is supported by the X-axis direction moving body 42 (see FIG. 3). Specifically, the tool stocker 45 is fixed to an upper surface of the X-axis direction moving body 42. Therefore, the holder moving device 40 is configured to move the tool stocker 45 to a tool gripping position P1 set under the opening portion A1U and a tool replacement position P2 set more forward than the tool gripping position P1. The tool replacement position P2 is set under the tool replacement area A4 (see FIG. 3). As illustrated in FIG. 3, an opening portion A4d is formed to be positioned above the tool replacement position P2 (see FIG. 2) and be opened in the Z-axis direction in a bottom wall A4D of the tool replacement area A4. The opening portion A4d is an opening used for removing and inserting the processing tool 8 from and to the tool stocker 45 by a user. When the holder moving device 40 is driven to move the tool stocker 45 to the tool replacement position P2, the user can access the tool stocker 45 from the tool replacement area A4 through the opening portion A4d.

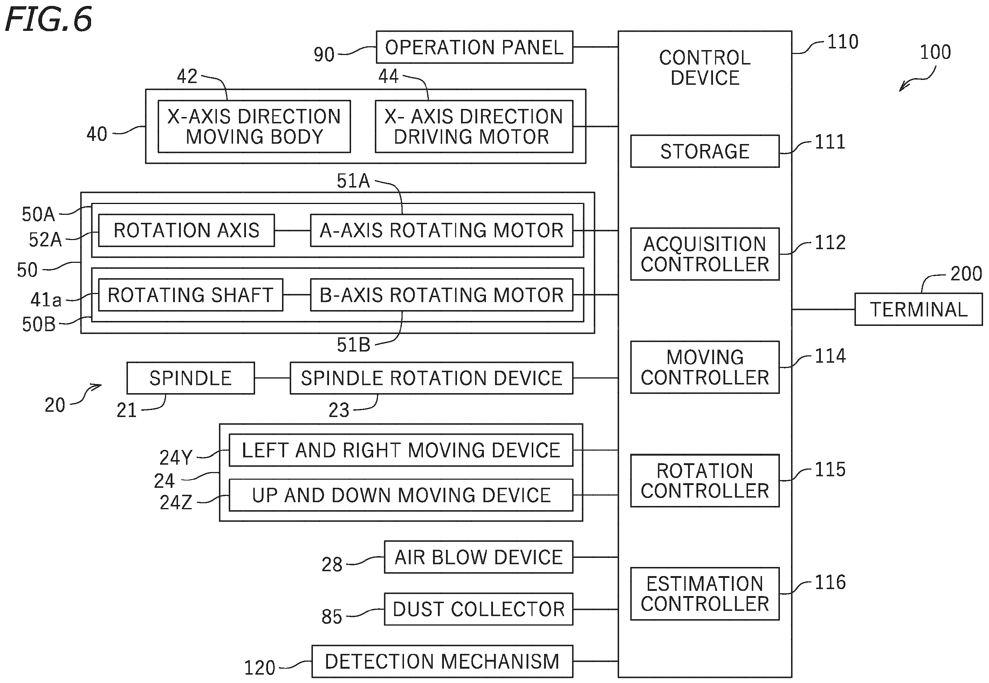

FIG. 6 is a block diagram of the cutting machine 100 according to this preferred embodiment. In this preferred embodiment, the cutting machine 100 includes a control device 110. The control device 110 is a device that performs control related to cutting of the workpiece 5. There is no particular limitation on a configuration of the control device 110. The control device 110 is, for example a microcomputer. The control device 110 includes, for example an I/F, a CPU, a ROM, a RAM, and a storage device. The control device 110 is provided in the case body 10. However, the control device 110 may be a computer installed outside the case body 10. In this case, the control device 110 is communicably connected to a control board (not illustrated) of the cutting machine 100 via a wire or wireless communication.

The control device 110 is communicably connected to the operation panel 90, the holder moving device 40 (specifically, the X-axis direction driving motor 44), the A-axis rotation device 50A (specifically, the A-axis rotating motor 51A), the B-axis rotation device 50B (specifically, the B-axis rotating motor 51B), the cutting device 20 (specifically, the spindle rotation device 23, the left and right moving device 24Y, and the up and down moving device 24Z), the air blow device 28, the dust collector 85, and a detection mechanism 120 that will be described later. The control device 110 controls the operation panel 90, the holder moving device 40, the A-axis rotation device 50A, the B-axis rotation device 50B, the cutting device 20, the air blow device 28, the dust collector 85, and the detection mechanism 120.

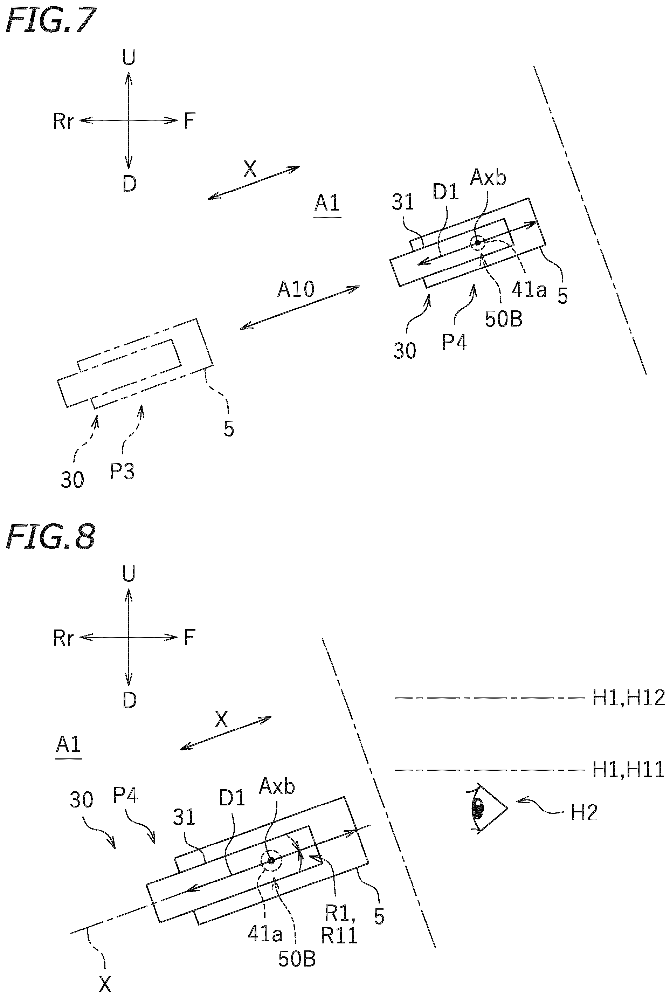

Incidentally, in this preferred embodiment, replacement of the workpiece 5 held by the work holder 30 is manually performed by the user. FIG. 7 is a schematic view illustrating a state where the work holder 30 is placed in a cutting position P3 and a state where the work holder 30 is placed in a replacement position P4. Note that, in FIG. 7 to FIG. 10, an area at a left side of a one-dot dashed line is the cutting area A1 and an area at a right side of the one-dot dashed line is an area in front of the case body 10. In FIG. 7 to FIG. 10, the adapter 6 is not illustrated. Herein, the holder moving device 40 of FIG. 3 is configured to move the work holder 30 to the cutting position P3 and the replacement position P4 as indicated by an arrow A10 in FIG. 7. The cutting position P3 is a position of the work holder 30 when the workpiece 5 held by the work holder 30 is cut by the cutting device 20 (see FIG. 2). The cutting position P3 is a position under the opening portion A1U (see FIG. 2) in the cutting area A1. The replacement position P4 is a position of the work holder 30 when the user manually replaces the workpiece 5 held by the work holder 30. The replacement position P4 is located in a position that proceeds from the cutting position P3 in a front side in the X-axis direction in the cutting area A1.

In this preferred embodiment, as illustrated in FIG. 5, the adapter 6 is attached to the workpiece 5. In the following description, when simply the term "the workpiece 5" is used, it refers to the workpiece 5 with the adapter 6 attached thereto. As illustrated in FIG. 7, a direction in which the workpiece 5 is moved with respect to the work holder 30 when the user attaches the workpiece 5 to the work holder 30 is referred to as a holding direction D1. In this preferred embodiment, the holding direction D1 is a direction from a front end to a rear end of the work holder 30, and is also a direction from a front end to a rear end of each of the first arm 31 and the second arm 32. The holding direction D1 is in parallel to the first arm 31 and the second arm 32, and is the same direction as a direction in which the first arm 31 and the second arm 32 extend. In this preferred embodiment, for example, in a state where the workpiece 5 is placed in parallel to the first arm 31 and the second arm 32, the workpiece 5 is moved from a position in front of the first arm 31 and the second arm 32 toward a position between the first arm 31 and the second arm 32 in the holding direction D1. Thus, the workpiece 5 is sandwiched between the first arm 31 and the second arm 32, so that the work holder 30 can hold the workpiece 5.

Incidentally, there are users having different heights. Therefore, depending on the users, heights of eye levels thereof differ. Conventionally, when the workpiece 5 held by the work holder 30 is manually replaced, a rotation angle of the work holder 30 in the front-rear direction (that is, around the axis line Axb that extends in the Y-axis direction), for example, a rotation angle in the holding direction D1 with respect to the X-axis direction (in other words, an angle between the X-axis direction and the holding direction D1) is fixed. Therefore, depending on the users having different heights of eye levels, it is difficult to remove the workpiece 5 from the work holder 30 and attach the workpiece 5 to the work holder 30.

Therefore, in this preferred embodiment, a rotation orientation of the work holder 30 during replacement of the workpiece 5 held by the work holder 30 by a user (which will be hereinafter also referred to simply as replacement of the workpiece 5) is adjusted. Herein, the rotation orientation of the work holder 30 when the work holder 30 is placed in the replacement position P4 is adjusted. As used herein, the rotation orientation of the work holder 30 refers to an orientation in the holding direction D1 in other words. FIG. 8, FIG. 9, and FIG. 10 are schematic views illustrating rotation orientations of the work holder 30 when a rotation angle R1 of the work holder 30 is a first rotation angle R11, a second rotation angle R12, and a third rotation angle R13. As illustrated in FIG. 8, the rotation orientation of the work holder 30 is represented by a predetermined rotation angle R1 between the X-axis direction and the holding direction D1. Note that, in this preferred embodiment, an orientation in the left-right direction when the work holder 30 is placed in the replacement position P4 (that is, the rotation orientation around the axis line Axa (see FIG. 5) extending in the X-axis direction) is an orientation of the work holder 30 in which the first arm 31 and the second arm 32 are arranged in the left-right direction and respective heights thereof are the same.

In this preferred embodiment, as illustrated in FIG. 8 to FIG. 10, for the rotation angle R1 when replacing the workpiece 5, multiple angles are set, and the rotation orientation of the work holder 30 can be adjusted in multiple stages. Herein, when replacing the workpiece 5, the rotation orientation of the work holder 30 can be adjusted in three stages. That is, there are three different angles for the rotation angle R1 of the work holder 30 when replacing the workpiece 5, and the rotation angle R1 includes the first rotation angle R11 (see FIG. 8), the second rotation angle R12 (see FIG. 9) that is different from the first rotation angle R11, and the third rotation angle R13 (see FIG. 10) that is different from the first rotation angle R11 and the second rotation angle R12. Herein, the rotation angle R1, that is, the first rotation angle R11 to the third rotation angle R13, is equal to or smaller than 90 degrees. For example, the first rotation angle R11 of FIG. 8 is 0 degrees, and orientations in the X-axis direction and the holding direction D1 match each other. The second rotation angle R12 is larger than the first rotation angle R11. The third rotation angle R13 is larger than the first rotation angle R11 and is also larger than the second rotation angle R12. However, the number of angles set for the rotation angle R1 is not limited to three, and may be two or four or more.

In this preferred embodiment, as illustrated in FIG. 6, the control device 110 includes a storage 111, an acquisition controller 112, a moving controller 114, a rotation controller 115, and an estimation controller 116. Each component of the control device 110 may be configured by a software and may be configured by a hardware. Each component of the control device 110 may be realized by one or more processors, and may be realized by a circuit.

In this preferred embodiment, as a method for determining the rotation orientation (in other words, the rotation angle R1) of the work holder 30 when replacing the workpiece 5, there are a first determination method and a second determination method. The first determination method is a method in which the rotation orientation of the work holder 30 is determined based on the rotation angle R1 designated by the user. The second determination method is a method in which the rotation orientation of the work holder 30 is determined in accordance with the height of the eye level of the user.

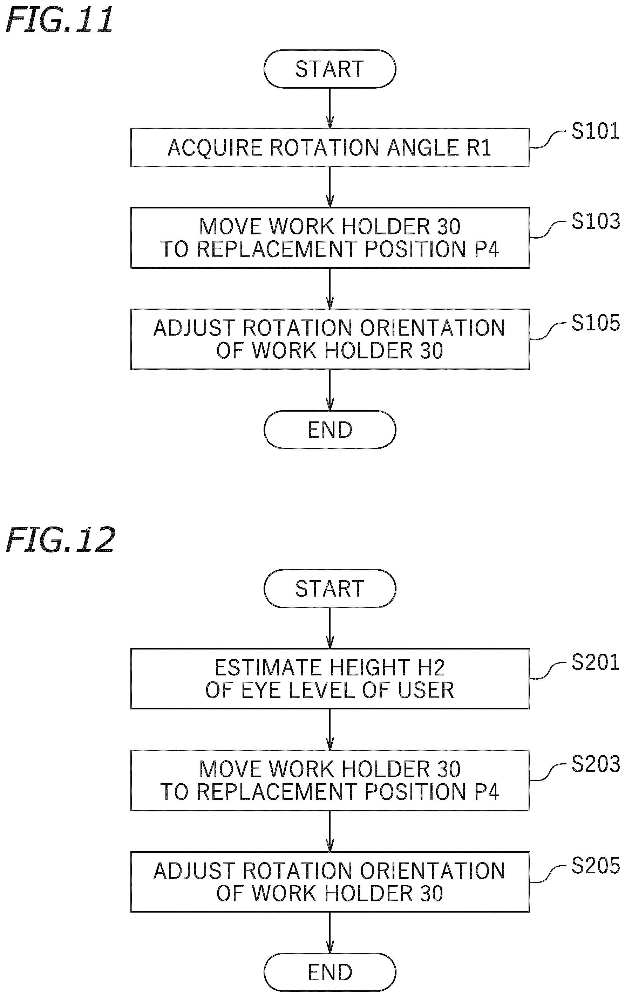

Next, a method in which the rotation orientation of the work holder 30 when replacing the workpiece 5 is determined, based on the rotation angle R1 designated by the user, that is the first determination method described above will be described in accordance with a flowchart of FIG. 11.

First, in Step S101 of FIG. 11, the rotation angle R1 is acquired. Herein, the acquisition controller 112 of FIG. 6 acquires the rotation angle R1 designated by the user. There is no particular limitation on an acquisition destination from which the acquisition controller 112 acquires the rotation angle R1. Also, there is no particular limitation on a method for designating the rotation angle R1 by the user. For example, the rotation angle R1 may be designated by operating the operation panel 90 illustrated in FIG. 1 by the user. Herein, the user switches the cutting machine 100 to a rotation angle designation mode by operating the operation panel 90. When the cutting machine 100 is in the rotation angle designation mode, each of the first rotation angle R11 to the third rotation angle R13 is associated with, for example, a number of times the user presses an input button 91 of the operation panel 90. The user can designate the rotation angle R1 associated with the number of times the input button 91 has been pressed by pressing at least one of the multiple input buttons 91 once or multiple times. In this preferred embodiment, the acquisition controller 112 acquires the rotation angle R1 (herein, one of the first rotation angle R11 to the third rotation angle R13) designated by operating the operation panel 90 by the user.

Note that, in this preferred embodiment, as illustrated in FIG. 1, a terminal 200 is communicably connected to the cutting machine 100. The terminal 200 is connected to the cutting machine 100, for example, via the Internet 210. The terminal 200 is a terminal used for operating the cutting machine 100, for example, a terminal used for instructing the cutting machine 100 to cut the workpiece 5. The terminal 200 is realized, for example, by a desktop-type or laptop-type personal computer used by the user. The terminal 200 may be realized by a dedicated computer for the cutting machine 100, and may be realized by a general-purpose computer. The terminal 200 may be a portable terminal, such as a so-called smartphone or tablet terminal, or the like.

The user may designate the rotation angle R1 from the first rotation angle R11 to the third rotation angle R13 by operating the terminal 200. In this case, information related to the rotation angle R1 designated by the user is transmitted from the terminal 200 to the cutting machine 100 via the Internet 210. The acquisition controller 112 acquires the rotation angle R1 designated by the user by acquiring the information related to the rotation angle R1 transmitted by the terminal 200. Note that the rotation angle R1 acquired by the acquisition controller 112 is stored in the storage 111 of FIG. 6.

Next, in Step S103 of FIG. 11, the work holder 30 is moved to the replacement position P4 (see FIG. 7). The moving controller 114 of FIG. 6 controls the holder moving device 40 such that the holder moving device 40 moves the work holder 30 to the replacement position P4. Herein, the moving controller 114 controls the holder moving device 40 such that the work holder 30 moves between the cutting position P3 and the replacement position P4. In this preferred embodiment, after cutting is performed on the workpiece 5 held by the work holder 30 using the cutting device 20, the work holder 30 is placed in the cutting position P3. Therefore, the moving controller 114 moves the work holder 30 from the cutting position P3 toward the replacement position P4 in the X-axis direction. Note that Step S103 may be executed before Step S101.

Next, in Step S105 of FIG. 11, the rotation orientation of the work holder 30 is adjusted. When the user replaces the workpiece 5 held by the work holder 30, the rotation controller 115 of FIG. 6 rotates the work holder 30 around the axis line Axb (see FIG. 5) such that the work holder 30 is placed to be in the rotation orientation achieved by rotating the holding direction D1 from the X-axis direction only by the predetermined rotation angle R1. Herein, the rotation controller 115 controls the B-axis rotation device 50B (see FIG. 3) such that the work holder 30 is placed to be in a rotation orientation achieved by rotating the holding direction D1 only by the rotation angle R1 designated by the user and acquired by the acquisition controller 112. As illustrated in FIG. 9, for example, when the rotation angle R1 designated by the user is the second rotation angle R12, the rotation controller 115 rotates the work holder 30 around the axis line Axb such that the angle between the X-axis direction and the holding direction D1 is the second rotation angle R12. Note that, herein, the rotation controller 115 rotates the work holder 30 in a state where the work holder 30 is placed in the replacement position P4.

Note that, in FIG. 11, the Step S105 may be executed before Step S103. That is, the rotation controller 115 may be configured to rotate the work holder 30 such that, in a state where the work holder 30 is placed in the cutting position P3, the angle between the X-axis direction and the holding direction D1 is the rotation angle R1 acquired by the acquisition controller 112. In this case, the moving controller 114 moves the work holder 30 in the rotation orientation, such as the rotation angle R1, from the cutting position P3 toward the replacement position P4. Even in this case, in the replacement position P4, the work holder 30 is placed to be in a rotation orientation in which the angle between the X-axis direction and the holding direction D1 is the rotation angle R1.

As described above, after the work holder 30 is rotated by the rotation controller 115, the user can replace the workpiece 5 held by the work holder 30. Herein, as illustrated in FIG. 4, first, the slide cover 60 is caused to slide upward to open the first opening 12a formed in the case body 10. At this time, through the first opening 12a, the cutting area A1 and the outside of the cutting machine 100 are communicated with each other. The user puts his or her hands into the cutting area A1 from the first opening 12a to remove the workpiece 5 from the work holder 30. The user pulls the workpiece 5 toward the front side in the holding direction D1. At this time, the workpiece 5 moves toward the front side in the holding direction D1 while sliding with respect to the first arm 31 and the second arm 32. Thus, the workpiece 5 can be removed from the work holder 30. Thereafter, the user holds another workpiece 5 that is to be attached by hands and moves the workpiece 5 from a position in front of the first arm 31 and the second arm 32 to the rear side in the holding direction D1 toward a position between the first arm 31 and the second arm 32. At this time, the workpiece 5 moves to the rear side in the holding direction D1 while sliding with respect to the first arm 31 and the second arm 32. Then, as illustrated in FIG. 5, when the workpiece 5 abuts on the coupling portion 33 of the work holder 30, the workpiece 5 is attached to the work holder 30. Thereafter, the first opening 12a can be closed by causing the slide cover 60 to slide downward. In a manner described above, the user can manually replace the workpiece 5.

Next, the second determination method described above, that is, a method in which the rotation orientation of the work holder 30 (in other words, the rotation angle R1) is determined in accordance with a height of an eye level of a user, will be described.

In executing the second determination method, as illustrated in FIG. 6, the cutting machine 100 includes the detection mechanism 120. The detection mechanism 120 detects a user in a position that faces the first opening 12a of the case body 10, that is, herein, a user positioned in front of the case body 10. Herein, the user positioned in front of the case body 10 can be expressed, in other words, as a user who performs a work of manually replacing the workpiece 5 held by the work holder 30 through the first opening 12a. Herein, a height of an eye level of the user is estimated based on a detection result for the user detected by the detection mechanism 120. Therefore, the detection mechanism 120 detects a position of the eyes (in other words, the height of the eyes) of the user.

Although not illustrated, the detection mechanism 120 is arranged in a front side of the cutting area A1, and detects a user positioned in front of the case body 10 through the first opening 12a and the slide cover 60. However, as long as the detection mechanism 120 can detect the user positioned in front of the case body 10, there is no particular limitation of an arrangement position of the detection mechanism 120. For example, the detection mechanism 120 may be provided on a front surface of the slide cover 60 located outside the cutting area A1.

There is no particular limitation on a type of the detection mechanism 120, as long as the detection mechanism 120 can detects a user (specifically, a height of eyes of the user). In this preferred embodiment, the detection mechanism 120 is constituted of a camera. Herein, a face of the user positioned in front of the case body 10 is photographed by the camera that is an example of the detection mechanism 120. A result object obtained by photographing by the detection mechanism 120 is an image. The image may be a still image, and may be a moving image. Herein, the detection mechanism 120 acquires an image of the face of the user. The height of the eye level of the user is estimated based on a position of the eyes acquired from the image and a height at which the detection mechanism 120 is arranged.

A method in which the rotation orientation of the work holder 30 when replacing the workpiece 5 is determined in accordance with a height of an eye level of a user, as the second determination method described above, will be described in accordance with a flowchart of FIG. 12.

First, in Step S201 of FIG. 12, the estimation controller 116 of FIG. 6 estimates a height H2 of an eye level of a user positioned in front of the case body 10. Herein, the estimation controller 116 estimates the height H2 of the eye level of the user positioned in front of the case body 10, based on a detection result of the detection mechanism 120. In this preferred embodiment, the estimation controller 116 transmits a detection signal to the detection mechanism 120. The detection mechanism 120 that has received the detection signal acquires an image achieved by photographing a face of the user positioned in front of the case body 10. The image photographed by the detection mechanism 120 is transmitted to the control device 110. The estimation controller 116 acquires an image photographed by the detection mechanism 120 by receiving the transmitted image.

Thereafter, the estimation controller 116 specifies a position of the eyes of the user from the image, for example, using an image processing technology. In this preferred embodiment, the detection mechanism 120 is fixed to the case body 10. Therefore, a position of the detection mechanism 120 in the up-down direction is fixed. Herein, the position of the detection mechanism 120 in the up-down direction, that is, a height at which the detection mechanism 120 is arranged, is stored in the storage 111 (see FIG. 6) of the control device 110 in advance. The estimation controller 116 calculates the height H2 of the eyes of the user positioned in front of the case body 10, based on the position of the eyes of the user in the image acquired from the detection mechanism 120 and the height of the detection mechanism 120.

Herein, the height H2 of the eye level of the user can be expressed in other words as the height of the eyes of the user. The height H2 of the eye level of the user is a height of centers of the eyes when the user faces front and is the height of the centers of the eyes with respect to the work holder 30.

Next, in Step S203 of FIG. 12, the moving controller 114 of FIG. 6 controls the holder moving device 40 such that the holder moving device 40 moves the work holder 30 to the replacement position P4. Note that, in Step S203, the same control as that of Step S103 of FIG. 11 is performed, and therefore, detailed description thereof will be omitted. Note that Step S203 may be executed before Step S201.

Next, in Step S205 of FIG. 12, the rotation controller 115 of FIG. 6 rotates the work holder 30 to adjust the rotation orientation. Herein, the rotation controller 115 determines the predetermined rotation angle R1 in accordance with the height H2 of the eye level of the user positioned in front of the case body 10. The rotation controller 115 determines the rotation angle R1 in accordance with the height H2 of the eye level of the user estimated by the estimation controller 116. Herein, the rotation controller 115 controls the B-axis rotation device 50B (see FIG. 3) in accordance with the height H2 of the eye level of the user estimated by the estimation controller 116. As illustrated in FIG. 8 to FIG. 10, the rotation controller 115 rotates the work holder 30 such that the rotation angle R1 is larger when the height H2 of the eye level of the user estimated by the estimation controller 116 is equal to or larger than a reference height H1 than when the height H2 is smaller than the reference height H1. In this preferred embodiment, the rotation angle R1 includes the first rotation angle R11 to the third rotation angle R13 and is adjusted in three stages. The rotation controller 115 adjusts the rotation angle R1 of the work holder 30 in three stages by comparing the height H2 of the eye level of the user estimated by the estimation controller 116 and the reference height H1 with each other.

Herein, the reference height H1 is a value that is stored in the storage 111 of FIG. 6 in advance. In this preferred embodiment, as illustrated in FIG. 8, the reference height H1 includes a first reference height H11 and a second reference height H12. There is no particular limitation on specific values of the first reference height H11 and the second reference height H12, and for example, specific values of the first reference height H11 and the second reference height H12 are set, for example, in accordance with the cutting area A1 and a height of the work holder 30.

The second reference height H12 is larger than the first reference height H11. Herein, as illustrated in FIG. 8, when the height H2 of the eye level of the user is smaller than the first reference height H11, the rotation controller 115 determines the rotation angle R1 of the work holder 30 to the first rotation angle R11. As illustrated in FIG. 9, the height H2 of the eye level of the user is equal to or larger than the first reference height H11 and is smaller than the second reference height H12, the rotation controller 115 determines the rotation angle R1 of the work holder 30 to the second rotation angle R12. As illustrated in FIG. 10, when the height H2 of the eye level of the user is equal to or larger than the second reference height H12, the rotation controller 115 determines the rotation angle R1 of the work holder 30 to the third rotation angle R13.

Herein, the lower the height H2 of the eye level of the user estimated by the estimation controller 116 is, the smaller the rotation angle R1 of the work holder 30 is set. The larger the height H2 of the eye level of the user is, the larger the rotation angle R1 of the work holder 30 is set.

Note that Step S205 of FIG. 12 may be executed before Step S203. That is, the moving controller 114 may be configured to move, after the work holder 30 is rotated by the rotation controller 115 and the rotation orientation is adjusted in Step S205, the work holder 30 that has been rotated from the cutting position P3 to the replacement position P4 in Step S203.

As described above, after the work holder 30 is rotated by the rotation controller 115 in Step S205, the user can replace the workpiece 5 held by the work holder 30 in a similar manner to that when the first determination method described above is used.

As has been described above, in this preferred embodiment, as illustrated in FIG. 2, the cutting machine 100 includes the work holder 30 that holds the workpiece 5, the case body 10, the B-axis rotation device 50B (see FIG. 3), and the control device 110 (see FIG. 6). As illustrated in FIG. 4, the cutting area A1 in which the work holder 30 is stored and the first opening 12a that is opened to one side (herein, the front side) in the X-axis direction and communicates with the cutting area A1 are formed in the case body 10. As illustrated in FIG. 5, the B-axis rotation device 50B rotates the work holder 30 around the axis line Axb that extends in the Y-axis direction that is orthogonal to the X-axis direction when viewed from top. The work holder 30 is configured to hold the workpiece 5 by moving the workpiece 5 in the holding direction D1 (see FIG. 8) toward the work holder 30 by the user. As illustrated in FIG. 6, the control device 110 includes the rotation controller 115. As in Step S105 of FIG. 11, when the user replaces the workpiece 5 held by the work holder 30, the rotation controller 115 rotates the work holder 30 around the axis line Axb such that the work holder 30 is placed to be in the rotation orientation (see, for example, FIG. 9) achieved by rotating the holding direction D1 from the X-axis direction only by the predetermined rotation angle R1. Thus, when the user manually replaces the workpiece 5 held by the work holder 30, adjustment can be made by rotating the work holder 30 by the rotation controller 115 to achieve the rotation orientation of the work holder that allows the user to easily replace the workpiece 5. Accordingly, the user can easily manually replace the workpiece 5.

In this preferred embodiment, as the predetermined rotation angles R1, multiple rotation angles are set in advance. Herein, the predetermined rotation angle R1 includes the first rotation angle R11 (see FIG. 8), the second rotation angle R12 (see FIG. 9) that is different from the first rotation angle R11, and the third rotation angle R13 (see FIG. 10) that is different from the first rotation angle R11 and the second rotation angle R12. The rotation controller 115 rotates the work holder 30 such that the work holder 30 is placed to be in the rotation orientation achieved by rotating the holding direction D1 only by one of the multiple predetermined rotation angles R1 (herein, the first rotation angle R11 to the third rotation angle R13). Thus, the rotation angle R1 of the work holder 30 can be adjusted in multiple stages (in this preferred embodiment, three stages). Accordingly, the rotation orientation of the work holder 30 can be easily adjusted in accordance with needs of the user.

In this preferred embodiment, the cutting machine 100 includes the cutting device 20 (see FIG. 2) that cuts the workpiece 5 held by the work holder 30, and the holder moving device 40 (see FIG. 5) that moves the work holder 30 in the X-axis direction. The holder moving device 40 is configured to move the work holder 30 to the cutting position P3 (see FIG. 7) in which cutting is performed on the workpiece 5 held by the work holder 30 and the replacement position P4 (see FIG. 7) that is located in a position that proceeds from the cutting position P3 in one side (herein, the front side) in the X-axis direction and in which the workpiece 5 held by the work holder 30 is replaced. As illustrated in FIG. 6, the control device 110 includes the moving controller 114. As in Step S103 of FIG. 11, the moving controller 114 controls the holder moving device 40 such that the work holder 30 moves between the cutting position P3 and the replacement position P4. When the work holder 30 is placed in the replacement position P4, the rotation controller 115 rotates the work holder 30 such that the work holder 30 is placed to be in the rotation orientation achieved by rotating the holding direction D1 only by the predetermined rotation angle R1. Thus, the rotation orientation of the work holder 30 can be adjusted to a rotation orientation in which, when the work holder 30 is placed in the replacement position P4, the user can easily replace the workpiece 5. Accordingly, in a state where the work holder 30 is placed in the replacement position P4, the user can easily replace the workpiece 5.

According to the invention, as illustrated in FIG. 6, the control device 110 includes the acquisition controller 112. The acquisition controller 112 acquires the predetermined rotation angle R1 (herein, one of the first rotation angle R11 to the third rotation angle R13) designated by the user in the first determination method described above, as in Step S101 of FIG. 11. As in S105 of FIG. 11, the rotation controller 115 rotates the work holder 30 such that the work holder 30 is placed to be in the rotation orientation achieved by rotating the holding direction D1 only by the predetermined rotation angle R1 acquired by the acquisition controller 112. Thus, the work holder 30 can be rotated with the rotation angle R1 designated by the user. Accordingly, the rotation orientation of the work holder 30 when the workpiece 5 is replaced can be easily made to be a rotation orientation desired by the user.

In this preferred embodiment, the cutting machine 100 includes the detection mechanism 120 (see FIG. 6) that detects the user in the position that faces the first opening 12a of the case body 10. As illustrated in FIG. 6, the control device 110 includes the estimation controller 116. The estimation controller 116 estimates the height H2 of the eye level of the user, based on the detection result of the detection mechanism 120, as in Step S201 of FIG. 12, in the second determination method described above. As in Step S205 of FIG. 12, the rotation controller 115 determines the predetermined rotation angle R1 in accordance with the height H2 of the eye level of the user estimated by the estimation controller 116 and rotates the work holder 30. Thus, the work holder 30 can be rotated in accordance with the height H2 of the eye level of the user. Accordingly, the rotation orientation of the work holder 30 can be adjusted such that the work holder 30 is in a position where the user can easily see the work holder 30, and therefore, the user can easily perform replacement of the workpiece 5.

In this preferred embodiment, as illustrated in FIG. 8 to FIG. 10, the rotation controller 115 rotates the work holder 30 such that the predetermined rotation angle R1 is larger when the height H2 of the eye level of the user estimated by the estimation controller 116 is equal to or larger than the reference height H1 than when the height H2 is smaller than the reference height H1. Thus, the work holder 30 can be rotated such that, the higher the eye level of the user is, the closer to the vertical direction the holding direction D1 becomes. Accordingly, even when the eye level of the user is high, the workpiece 5 can be easily moved in the holding direction D1, and replacement of the workpiece 5 can be facilitated.

In this preferred embodiment, as illustrated in FIG. 5, the work holder 30 includes the first arm 31 that extends in the holding direction D1 and the second arm 32 that extends in the holding direction D1 in a position separated from the first arm 31 and holds the workpiece 5 with the first arm 31 such that the workpiece 5 is sandwiched between the first arm 31 and the second arm 32. Thus, the user can remove the workpiece 5 from the work holder 30 and attach the workpiece 5 to the work holder 30 by moving the workpiece 5 in the holding direction D1 in a position in which the workpiece 5 is sandwiched between the first arm 31 and the second arm 32.

## Claims

1. A cutting machine (100) comprising:
a holding device (30) that is configured to hold a workpiece (5) that is to be cut;
a case body (10) in which an area (A1) in which the holding device (30) is stored and an opening portion (12a) that is opened to one side in a first direction (X) and communicates with the area (A1) are formed;
a rotation device (50B) that is configured to rotate the holding device (30) around an axis line (Axb) that extends in a second direction (Y) that is orthogonal to the first direction (X) when viewed from top; and
a control device (110),
wherein
the holding device (30) is configured to hold the workpiece (5) by moving the workpiece (5) in a holding direction (D1) toward the holding device (30) by a user, and
the control device (110) includes a rotation controller (115) that is configured to rotate, when the workpiece (5) held by the holding device (30) is replaced at a replacement position (P4), the holding device (30) around the axis line (Axb) such that the holding device (30) is placed at the replacement position (P4) to be in a rotation orientation achieved by rotating the holding direction (D1) from the first direction (X) only by a predetermined rotation angle (R1),
and **characterized in that**
the control device (110) includes an acquisition controller (112) that is configured to acquire the predetermined rotation angle (R1) designated by the user, and
the rotation controller (115) is configured to rotate the holding device (30) such that the holding device (30) is placed to be in the rotation orientation achieved by rotating the holding direction (D1) only by the predetermined rotation angle (R1) acquired by the acquisition controller (112).

2. The cutting machine (100) according to claim 1, wherein
as the predetermined rotation angle (R1), multiple predetermined rotation angles are set in advance, and
the rotation controller (115) is configured to rotate the holding device (30) such that the holding device (30) is placed to be in a rotation orientation achieved by rotating the holding direction (D1) only by one of the multiple predetermined rotation angles (R1).

3. The cutting machine (100) according to claim 2, wherein the predetermined rotation angle (R1) includes
a first rotation angle (R11),
a second rotation angle (R12) that is different from the first rotation angle (R11), and
a third rotation angle (R13) that is different from the first rotation angle (R11) and the second rotation angle (R12).

4. The cutting machine (100) according to any one of claims 1 to 3, further comprising:
a cutting device (20) that is configured to cut the workpiece (5) held by the holding device (30); and
a moving device (40) that is configured to move the holding device (30) in the first direction (X),
wherein
the moving device (40) is configured to move the holding device (30) to a cutting position (P3) in which cutting is performed on the workpiece (5) held by the holding device (30) and the replacement position (P4) that is located in a position that proceeds from the cutting position (P3) in one side in the first direction (X) and in which the workpiece (5) held by the holding device (30) is replaced,
the control device (110) includes a moving controller (114) that is configured to control the moving device (40) such that the holding device (30) moves between the cutting position (P3) and the replacement position (P4), and
the rotation controller (115) is configured to rotate the holding device (30) such that, when the holding device (30) is placed in the replacement position (P4), the holding device (30) is placed to be in a rotation orientation achieved by rotating the holding direction (D1) only by the predetermined rotation angle (R1).

5. The cutting machine (100) according to any one of claims 1 to 4, further comprising:
an operation panel (90) including an input button (91) that is configured to be operated by the user,
wherein
the acquisition controller (112) is configured to acquire the predetermined rotation angle (R1) designated by the user by operating the operation panel (90).

6. The cutting machine (100) according to claim 1, further comprising:
a detection mechanism (120) that is configured to detect a user in a position that faces the opening portion (12a) of the case body (10),
wherein
the control device (110) includes an estimation controller (116) that is configured to estimate a height (H2) of an eye level of the user, based on a detection result of the detection mechanism (120), and
the rotation controller (115) is configured to determine the predetermined rotation angle (R1) in accordance with the height (H2) of the eye level of the user estimated by the estimation controller (116) and to rotate the holding device (30).

7. The cutting machine (100) according to claim 6, wherein
the detection mechanism (120) is a camera that is configured to detect a position of eyes of the user.

8. The cutting machine (100) according to claim 7,
wherein
the estimation controller (116) is configured to receive an image obtained by photographing a face of the user by the detection mechanism (120) and to specify the position of the eyes of the user from the image using an image processing technology.

9. The cutting machine (100) according to any one of claims 6 to 8, further comprising:
a cover (60) that is configured to open and to close the opening portion (12a) of the case body (10),
wherein
the detection mechanism (120) is arranged in one side in the first direction (X) in the area (A1) and is configured to detect the user in the position that faces the opening portion (12a) through the opening portion (12a) and the cover (60).

10. The cutting machine (100) according to any one of claims 6 to 9, wherein
the rotation controller (115) is configured to rotate the holding device (30) such that the predetermined rotation angle (R1) is larger when the height (H2) of the eye level of the user estimated by the estimation controller (116) is equal to or larger than a reference height (H1) than when the height (H2) is smaller than the reference height (H1).

11. The cutting machine (100) according to claim 10, wherein
the reference height (H1) includes
a first reference height (H11), and
a second reference height (H12) that is larger than the first reference height (H1), the rotation controller (115) is configured to determine
when the height (H2) of the eye level of the user is smaller than the first reference height (H11), the predetermined rotation angle (R1) to a first rotation angle (R11),
when the height (H2) of the eye level of the user is equal to or larger than the first reference height (H11) and is smaller than the second reference height (H12), the predetermined rotation angle (R1) to a second rotation angle (R12) that is larger than the first rotation angle (R11), and
when the height (H2) of the eye level of the user is equal to or larger than the second reference height (H12), the predetermined rotation angle (R1) to a third rotation angle (R13) that is larger than the second rotation angle (R12).

12. The cutting machine (100) according to any one of claims 1 to 11, wherein the holding device (30) includes
a first arm (31) that extends in the holding direction (D1), and
a second arm (32) that extends in the holding direction (D1) in a position separated from the first arm (31) and is configured to hold the workpiece (5) with the first arm (31) such that the workpiece (5) is sandwiched between the first arm (31) and the second arm (32).

## Patentansprüche

1. Schneidemaschine (100), umfassend:
eine Haltevorrichtung (30), die konfiguriert ist, um ein zu schneidendes Werkstück (5) zu halten;
einen Gehäusekörper (10), in dem ein Bereich (A1), in dem die Haltevorrichtung (30) untergebracht ist, und ein Öffnungsabschnitt (12a) ausgebildet sind, der in einer ersten Richtung (X) zu einer Seite hin offen ist und mit dem Bereich (A1) in Verbindung steht;
eine Drehvorrichtung (50B), die konfiguriert ist, um die Haltevorrichtung (30) um eine Achsenlinie (Axb) zu drehen, die sich in einer zweiten Richtung (Y) erstreckt, die von oben betrachtet orthogonal zur ersten Richtung (X) ist; und
eine Steuervorrichtung (110),
wobei
die Haltevorrichtung (30) konfiguriert ist, das Werkstück (5) zu halten, indem das Werkstück (5) durch einen Benutzer in einer Halterichtung (D1) auf die Haltevorrichtung (30) zu bewegt wird, und
die Steuervorrichtung (110) eine Drehsteuerung (115) umfasst, die konfiguriert ist, um, wenn das von der Haltevorrichtung (30) gehaltene Werkstück (5) an einer Austauschposition (P4) ausgetauscht wird, die Haltevorrichtung (30) um die Achsenlinie (Axb) so zu drehen, dass die Haltevorrichtung (30) an der Austauschposition (P4) so angeordnet wird, dass sie sich in einer Drehausrichtung befindet, die durch Drehen der Halterichtung (D1) aus der ersten Richtung (X) um lediglich einen vorbestimmten Drehwinkel (R1) erreicht wird,
die Steuervorrichtung (110) eine Erfassungssteuerung (112) umfasst, die konfiguriert ist, den vom Benutzer festgelegten vorbestimmten Drehwinkel (R1) zu erfassen, und
die Drehsteuerung (115) so konfiguriert ist, dass sie die Haltevorrichtung (30) so dreht, dass die Haltevorrichtung (30) in die Drehausrichtung gebracht wird, die durch Drehen der Halterichtung (D1) um nur den von der Erfassungssteuerung (112) erfassten vorbestimmten Drehwinkel (R1) erreicht wird.

2. Die Schneidemaschine (100) nach Anspruch 1, wobei
als vorbestimmter Drehwinkel (R1) mehrere vorbestimmte Drehwinkel im Voraus festgelegt werden, und
die Drehsteuerung (115) so konfiguriert ist, dass sie die Haltevorrichtung (30) so dreht, dass die Haltevorrichtung (30) in eine Drehausrichtung gebracht wird, die durch Drehen der Halterichtung (D1) nur um einen der mehreren vorbestimmten Drehwinkel (R1) erreicht wird.

3. Die Schneidemaschine (100) nach Anspruch 2, wobei der vorbestimmte Drehwinkel (R1) umfasst
einen ersten Drehwinkel (R11),
einen zweiten Drehwinkel (R12), der sich vom ersten Drehwinkel (R11) unterscheidet, und
einen dritten Drehwinkel (R13), der sich vom ersten Drehwinkel (R11) und vom zweiten Drehwinkel (R12) unterscheidet.

4. Die Schneidemaschine (100) gemäß einem der Ansprüche 1 bis 3, ferner umfassend:
eine Schneidevorrichtung (20), die konfiguriert ist, das von der Haltevorrichtung (30) gehaltene Werkstück (5) zu schneiden; und
eine Bewegungsvorrichtung (40), die konfiguriert ist, die Haltevorrichtung (30) in der ersten Richtung (X) zu bewegen,
wobei
die Bewegungsvorrichtung (40) so konfiguriert ist, dass sie die Haltevorrichtung (30) zu einer Schneidposition (P3), in der das von der Haltevorrichtung (30) gehaltene Werkstück (5) geschnitten wird, und zu der Austauschposition (P4) bewegt, die sich an einer Stelle befindet, die von der Schneidposition (P3) in einer Seite in der ersten Richtung (X) weiterliegt und in der das von der Haltevorrichtung (30) gehaltene Werkstück (5) ausgetauscht wird,
die Steuervorrichtung (110) eine Bewegungssteuerung (114) umfasst, die so konfiguriert ist, dass sie die Bewegungsvorrichtung (40) so steuert, dass sich die Haltevorrichtung (30) zwischen der Schneidposition (P3) und der Austauschposition (P4) bewegt, und
die Drehsteuerung (115) so konfiguriert ist, dass sie die Haltevorrichtung (30) so dreht, dass, wenn die Haltevorrichtung (30) in der Austauschposition (P4) platziert wird, die Haltevorrichtung (30) in einer Drehausrichtung platziert wird, die durch Drehen der Halterichtung (D1) nur um den vorbestimmten Drehwinkel (R1) erreicht wird.

5. Die Schneidemaschine (100) gemäß einem der Ansprüche 1 bis 4, ferner umfassend:
ein Bedienfeld (90) mit einer Eingabetaste (91), die so ausgelegt ist, dass sie vom Benutzer betätigt werden kann,
wobei
die Erfassungssteuerung (112) so konfiguriert ist, dass sie den vom Benutzer durch Betätigen des Bedienfelds (90) festgelegten vorbestimmten Drehwinkel (R1) erfasst.

6. Die Schneidemaschine (100) gemäß Anspruch 1, ferner umfassend:
einen Erfassungsmechanismus (120), der so konfiguriert ist, dass er einen Benutzer in einer Position erfasst, die dem Öffnungsabschnitt (12a) des Gehäusekörpers (10) zugewandt ist,
wobei
die Steuervorrichtung (110) eine Schätzsteuerung (116) umfasst, die so konfiguriert ist, dass sie eine Höhe (H2) der Augenhöhe des Benutzers auf der Grundlage eines Erfassungsergebnisses des Erfassungsmechanismus (120) schätzt, und
die Drehsteuerung (115) so konfiguriert ist, dass sie den vorbestimmten Drehwinkel (R1) entsprechend der von der Schätzsteuerung (116) geschätzten Höhe (H2) der Augenhöhe des Benutzers bestimmt und die Haltevorrichtung (30) dreht.

7. Die Schneidemaschine (100) nach Anspruch 6, wobei
der Erfassungsmechanismus (120) eine Kamera ist, die so konfiguriert ist, dass sie eine Position der Augen des Benutzers erfasst.

8. Die Schneidemaschine (100) nach Anspruch 7,
wobei
die Schätzsteuerung (116) so konfiguriert ist, dass sie ein Bild empfängt, das durch Fotografieren eines Gesichts des Benutzers durch den Erfassungsmechanismus (120) erhalten wurde, und die Position der Augen des Benutzers anhand des Bildes unter Verwendung einer Bildverarbeitungstechnologie bestimmt.

9. Die Schneidemaschine (100) nach einem der Ansprüche 6 bis 8, ferner umfassend:
eine Abdeckung (60), die so konfiguriert ist, dass sie den Öffnungsabschnitt (12a) des Gehäusekörpers (10) öffnet und schließt,
wobei
der Erfassungsmechanismus (120) in einem Bereich (A1) auf einer Seite in der ersten Richtung (X) angeordnet ist und so konfiguriert ist, dass er den Benutzer in der Position, in der er dem Öffnungsabschnitt (12a) zugewandt ist, durch den Öffnungsabschnitt (12a) und die Abdeckung (60) hindurch erfasst.

10. Die Schneidemaschine (100) gemäß einem der Ansprüche 6 bis 9, wobei die Drehsteuerung (115) so konfiguriert ist, dass sie die Haltevorrichtung (30) derart dreht, dass der vorbestimmte Drehwinkel (R1) größer ist, wenn die von der Schätzsteuerung (116) geschätzte Augenhöhe (H2) des Benutzers gleich oder größer als eine Referenzhöhe (H1) ist, als wenn die Höhe (H2) kleiner als die Referenzhöhe (H1) ist.

11. Die Schneidemaschine (100) gemäß Anspruch 10, wobei die Referenzhöhe (H1) umfasst
eine erste Referenzhöhe (H11) und
eine zweite Referenzhöhe (H12), die größer ist als die erste Referenzhöhe (H1), die Drehsteuerung (115) konfiguriert ist, um
wenn die Höhe (H2) der Augenhöhe des Benutzers kleiner ist als die erste Referenzhöhe (H11), den vorbestimmten Drehwinkel (R1) auf einen ersten Drehwinkel (R11) festzulegen,
wenn die Höhe (H2) der Augenhöhe des Benutzers gleich oder größer als die erste Referenzhöhe (H11) und kleiner als die zweite Referenzhöhe (H12) ist, den vorbestimmten Drehwinkel (R1) auf einen zweiten Drehwinkel (R12) festzulegen, der größer ist als der erste Drehwinkel (R11), und
wenn die Höhe (H2) der Augenhöhe des Benutzers gleich oder größer als die zweite Referenzhöhe (H12) ist, den vorbestimmten Drehwinkel (R1) auf einen dritten Drehwinkel (R13) festzulegen, der größer ist als der zweite Drehwinkel (R12).

12. Die Schneidemaschine (100) gemäß einem der Ansprüche 1 bis 11, wobei die Haltevorrichtung (30) umfasst
einen ersten Arm (31), der sich in Halterichtung (D1) erstreckt, und
einen zweiten Arm (32), der sich in der Halterichtung (D1) in einer vom ersten Arm (31) beabstandeten Position erstreckt und so ausgebildet ist, dass er das Werkstück (5) gemeinsam mit dem ersten Arm (31) hält, sodass das Werkstück (5) zwischen dem ersten Arm (31) und dem zweiten Arm (32) eingeklemmt ist.

## Revendications

1. Machine de coupe (100) comprenant :
un dispositif de maintien (30) qui est configuré pour maintenir une pièce à usiner (5) devant être coupée ;
un corps de boîtier (10) dans lequel sont formées une zone (A1) dans laquelle est stocké le dispositif de maintien (30) et une partie d'ouverture (12a) qui s'ouvre sur un côté dans une première direction (X) et communique avec la zone (A1) :
un dispositif de rotation (50B) qui est configuré pour faire tourner le dispositif de maintien (30) autour d'une ligne d'axe (Axb) qui s'étend dans une seconde direction (Y) qui est orthogonale à la première direction (X) lorsqu'on regarde depuis le dessus ; et
un dispositif de commande (110),
dans laquelle
le dispositif de maintien (30) est configuré pour maintenir la pièce à usiner (5) en déplaçant la pièce à usiner (5) dans une direction de maintien (D1) vers le dispositif de maintien (30) par un utilisateur, et
le dispositif de commande (110) comprend une unité de commande de rotation (115) qui est configurée pour faire tourner, lorsque la pièce à usiner (5) maintenue par le dispositif de maintien (30) est replacée à une position de remplacement (P4), le dispositif de maintien (30) autour de la ligne d'axe (Axb) de sorte que le dispositif de maintien (30) soit placé à la position de remplacement (P4) pour se trouver dans une orientation de rotation obtenue en faisant tourner la direction de maintien (D1) à partir de la première direction (X) uniquement d'un angle de rotation prédéterminé (R1),
et **caractérisée en ce que**
le dispositif de commande (110) comprend une unité de commande d'acquisition (112) qui est configurée pour acquérir l'angle de rotation prédéterminé (R1) désigné par l'utilisateur, et
l'unité de commande de rotation (115) est configurée pour faire tourner le dispositif de maintien (30) de sorte que le dispositif de maintien (30) soit placé de manière à se trouver dans l'orientation de rotation obtenue en faisant tourner la direction de maintien (D1) uniquement de l'angle de rotation prédéterminé (R1) acquis par l'unité de commande d'acquisition (112).

2. Machine de coupe (100) selon la revendication 1, dans laquelle
en tant qu'angle de rotation prédéterminé (R1), plusieurs angles de rotation prédéterminés sont définis à l'avance, et
l'unité de commande de rotation (115) est configurée pour faire tourner le dispositif de maintien (30) de sorte que le dispositif de maintien (30) soit placé de manière à se trouver dans une orientation de rotation obtenue en faisant tourner la direction de maintien (D1) uniquement d'un des plusieurs angles de rotation prédéterminés (R1).

3. Machine de coupe (100) selon la revendication 2, dans laquelle l'angle de rotation prédéterminé (R1) comprend
un premier angle de rotation (R11),
un deuxième angle de rotation (R12) qui est différent du premier angle de rotation (R11), et
un troisième angle de rotation (R13) qui est différent du premier angle de rotation (R11) et du deuxième angle de rotation (R12).

4. Machine de coupe (100) selon l'une quelconque des revendications 1 à 3, comprenant en outre :
un dispositif de coupe (20) qui est configuré pour couper la pièce à usiner (5) maintenue par le dispositif de maintien (30) ; et
un dispositif de déplacement (40) qui est configuré pour déplacer le dispositif de maintien (30) dans la première direction (X),
dans laquelle
le dispositif de déplacement (40) est configuré pour déplacer le dispositif de maintien (30) vers une position de coupe (P3) dans laquelle la coupe est effectuée sur la pièce à usiner (5) maintenue par le dispositif de maintien (30) et vers la position de remplacement (P4) qui est située dans une position s'étendant depuis la position de coupe (P3) dans un côté dans la première direction (X) et dans laquelle la pièce à usiner (5) maintenue par le dispositif de maintien (30) est remplacée,
le dispositif de commande (110) comprend une unité de commande de déplacement (114) qui est configurée pour commander le dispositif de déplacement (40) de sorte que le dispositif de maintien (30) se déplace entre la position de coupe (P3) et la position de remplacement (P4), et
l'unité de commande de rotation (115) est configurée pour faire tourner le dispositif de maintien (30) de sorte que, lorsque le dispositif de maintien (30) est placé dans la position de remplacement (P4), le dispositif de maintien (30) soit placé de manière à se trouver dans une orientation de rotation obtenue en faisant tourner la direction de maintien (D1) uniquement de l'angle de rotation prédéterminé (R1).

5. Machine de coupe (100) selon l'une quelconque des revendications 1 à 4, comprenant en outre :
un panneau d'actionnement (90) comprenant un bouton d'entrée (91) qui est configuré pour être actionné par l'utilisateur,
dans laquelle
l'unité de commande d'acquisition (112) est configurée pour acquérir l'angle de rotation prédéterminé (R1) désigné par l'utilisateur en actionnant le panneau d'actionnement (90).

6. Machine de coupe (100) selon la revendication 1, comprenant en outre :
un mécanisme de détection (120) qui est configuré pour détecter un utilisateur dans une position qui fait face à la partie d'ouverture (12a) du corps de boîtier (10),
dans laquelle
le dispositif de commande (110) comprend une unité de commande d'estimation (116) qui est configurée pour estimer une hauteur (H2) du niveau des yeux de l'utilisateur, sur la base d'un résultat de détection du mécanisme de détection (120), et
l'unité de commande de rotation (115) est configurée pour déterminer l'angle de rotation prédéterminé (R1) en fonction de la hauteur (H2) du niveau des yeux de l'utilisateur estimée par l'unité de commande d'estimation (116) et pour faire tourner le dispositif de maintien (30).

7. Machine de coupe (100) selon la revendication 6, dans laquelle
le mécanisme de détection (120) est une caméra qui est configurée pour détecter la position des yeux de l'utilisateur.

8. Machine de coupe (100) selon la revendication 7,
dans laquelle
l'unité de commande d'estimation (116) est configurée pour recevoir une image obtenue en photographiant le visage de l'utilisateur par le mécanisme de détection (120) et pour spécifier la position des yeux de l'utilisateur à partir de l'image en utilisant une technologie de traitement d'image.

9. Machine de coupe (100) selon l'une quelconque des revendications 6 à 8, comprenant en outre :
un couvercle (60) qui est configuré pour ouvrir et fermer la partie d'ouverture (12a) du corps de boîtier (10),
dans laquelle
le mécanisme de détection (120) est agencé dans un côté dans la première direction (X) dans la zone (A1) et est configuré pour détecter l'utilisateur dans la position qui fait face à la partie d'ouverture (12a) à travers la partie d'ouverture (12a) et le couvercle (60).

10. Machine de coupe (100) selon l'une quelconque des revendications 6 à 9, dans laquelle
l'unité de commande de rotation (115) est configurée pour faire tourner le dispositif de maintien (30) de sorte que l'angle de rotation prédéterminé (R1) soit plus grand lorsque la hauteur (H2) du niveau des yeux de l'utilisateur estimée par l'unité de commande d'estimation (116) est supérieure ou égale à une hauteur de référence (H1) que lorsque la hauteur (H2) est inférieure à la hauteur de référence (H1).

11. Machine de coupe (100) selon la revendication 10, dans laquelle la hauteur de référence (H1) comprend
une première hauteur de référence (H11), et
une seconde hauteur de référence (H12) qui est supérieure à la première hauteur de référence (H1),
l'unité de commande de rotation (115) est configurée pour déterminer
lorsque la hauteur (H2) du niveau des yeux de l'utilisateur est inférieure à la première hauteur de référence (H11), l'angle de rotation prédéterminé (R1) comme un premier angle de rotation (R11),
lorsque la hauteur (H2) du niveau des yeux de l'utilisateur est supérieure ou égale à la première hauteur de référence (H11) et inférieure à la seconde hauteur de référence (H12), l'angle de rotation prédéterminé (R1) comme un deuxième angle de rotation (R12) qui est supérieur au premier angle de rotation (R11), et
lorsque la hauteur (H2) du niveau des yeux de l'utilisateur est supérieure ou égale à la seconde hauteur de référence (H12), l'angle de rotation prédéterminé (R1) comme un troisième angle de rotation (R13) qui est supérieur au deuxième angle de rotation (R12).

12. Machine de coupe (100) selon l'une quelconque des revendications 1 à 11, dans laquelle le dispositif de maintien (30) comprend
un premier bras (31) qui s'étend dans la direction de maintien (D1), et
un second bras (32) qui s'étend dans la direction de maintien (D1) dans une position séparée du premier bras (31) et qui est configuré pour maintenir la pièce à usiner (5) avec le premier bras (31) de sorte que la pièce à usiner (5) soit prise en sandwich entre le premier bras (31) et le second bras (32).
